(19) Europäisches Patentamt

European Patent Office

Office européen des brevets

(11) **EP 0 988 966 A2**

(12) **EUROPEAN PATENT APPLICATION**

(43) Date of publication:
**29.03.2000 Bulletin 2000/13**

(51) Int. Cl.$^7$: **B32B 27/36**

(21) Application number: **99118547.1**

(22) Date of filing: **20.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.09.1998 JP 27096998**
       **08.12.1998 JP 34847798**

(71) Applicant:
**Mitsubishi Polyester Film Corporation
Minato-ku, Tokyo (JP)**

(72) Inventors:
• **Hibiya, Takashi,
Mitsubishi Polyester Film Corp.
Santo-cho, Sakata-gun, Shiga-ken (JP)**
• **Miki, Takatoshi,
Mitsubishi Polyester Film Corp.
Santo-cho, Sakata-gun, Shiga-ken (JP)**

(74) Representative:
**TER MEER STEINMEISTER & PARTNER GbR
Mauerkircherstrasse 45
81679 München (DE)**

(54) **Micro-cellular polyester film**

(57) The present invention relates to a micro-cellular laminated polyester film comprising:

a micro-cellular polyester layer A having a density ($\rho_A$) of 0.50 to 1.20 g/cm$^3$ and
at least one polyester layer B laminated on at least one side of the polyester layer A, having not less than 1.10 g/cm$^3$ of a density ($\rho_B$) which is at least 0.10 g/cm$^3$ higher than $\rho_A$ and, containing 0.05 to 0.44 g/m$^2$ of white inorganic particles.

EP 0 988 966 A2

**Description**

BACKGROUND OF THE INVENTION

The present invention relates to a micro-cellular polyester film. More particularly, the present invention relates to a micro-cellular polyester film and image receiving paper for video printers using the said micro-cellular polyester film as base film.

Image receiving paper (printing paper) for printers used in combination with various types of computers, calculators, measuring devices, copiers, facsimiles and such mostly comprises a support such as relatively inexpensive paper and a print receiving layer provided on the support.

According to rapid diversification of the uses of printing art, a requirement of finer image quality is increased. For example, it is required for image receiving paper for video printers to be capable of providing silver salt photographic image quality.

The image taken by a video camera is resolved into the three primary colors, viz. cyan, magenta and yellow, and converted into the electrical signals, which are sent to a thermal transfer printer. In response to these signals, the thermal head operates to successively sublime or fuse the coloring materials on a color sheet having the three primary colors severally to form a transfer image on the image receiving paper.

When a conventional image receiving paper using a natural paper itself as substrate is used in this system, it is impossible to obtain a fine image because the coloring material receiving layer is affected by roughness of the natural paper surface. Image receiving paper improved in surface smoothness by applying a polyolefin film on the base paper, similar to the ordinary photographic printing paper, is also used, but this image receiving paper still involves the problems such as shrinkage of the polyolefin film which is low in heat resistance.

The micro-cellular laminated polyester films with high heat resistance usually have the white inorganic particles contained in the surface layer to provide an opacifying effect so that the roughness of the intermediate layer (containing fine cells) won't be visible through the film surface. Further increase of this surface layer opacifying effect is desirable because it tends to elevate optical density (reflection) of the received image.

Also, increase of the white inorganic particle content in the surface layer may invite a sharp reduction of surface gloss (gloss of the image receiving surface of the film), making it hard to obtain a fine image.

High surface gloss can be realized by laminating a clear polyester layer containing no white inorganic particles on the micro-cellular film, but in this case roughness of the micro-cellular layer is reflected on the printed image through the clear layer to cause a reduction of fineness of the image (flickering of the image).

Further, a micro-cellular polyester film obtained by containing in the polyester a thermoplastic resin incompatible with the said polyester and stretching the film is used as base of image receiving paper, but this process has the problem that fineness (glossiness) of the received image lowers under the influence of the cells existing in the neighborhood of the film surface.

As a result of the present inventors' earnest studies to solve the above problems, it has been found that a film comprising a laminate of a micro-cellular polyester layer A having a specific density and a polyester layer B having a specific density or a micro-cellular polyester film having a specific pore distribution mode diameter in the surface can be ideally used as base film of image receiving paper for video printers.

The present invention has been attained on the basis of the above finding.

SUMMARY OF THE INVENTION

The first object of the present invention is to provide a film having excellent heat resistance as well as moderate flexibility and containing the finely divided cells so that its weight per unit volume is reduced, and when used, for instance, as base of image receiving paper for video printers, the film is capable of providing high glossiness and fineness to the received image.

To attain the above aims, in the first aspect of the present invention, there is provided a micro-cellular laminated polyester film comprising:

a micro-cellular polyester layer A having a density ($\rho_A$) of 0.50 to 1.20 g/cm$^3$ and

at least one polyester layer B laminated on at least one side of the polyester layer A, having not less than 1.10 g/cm$^3$ of a density ($\rho_B$) which is at least 0.10 g/cm$^3$ higher than $\rho_A$ and, containing 0.05 to 0.44 g/m$^2$ of white inorganic particles.

In the second aspect of the present invention, there is provided an image receiving paper for video printer, comprising the micro-cellular laminated polyester film as defined in the first aspect and a coloring material receiving layer formed on the polyester layer B surface of the micro-cellular laminated polyester film.

In the third aspect of the present invention, there is provided a micro-cellular polyester film comprising a polyester and a thermoplastic resin blended with said polyester, which is incompatible with said polyester,

a pore distribution mode diameter by volume-based in the surface of said film being 0.01 to 0.15 μm.

In the fourth aspect of the present invention, there is provided an image receiving paper for video printer, comprising the micro-cellular polyester film as defined in the third aspect and a coloring material receiving layer formed on the surface of the micro-cellular polyester film.

## DETAILED DESCRIPTION OF THE INVENTION

The present invention is described in detail below.

The polyester constituting the base of the micro-cellular polyester film of the present invention is a polyester produced by using an aromatic dicarboxylic acid or an ester thereof and a glycol as main starting materials. As the dicarboxylic acid, there can be used one or more of terephthalic acid, isophthalic acid, 2,6-naphthalenedicarboxylic acid, phthalic acid, adipic acid, sebacic acid, oxycarboxylic acid (such as p-oxyethoxybenzoic acid) and the like. As the glycol, one or more of ethylene glycol, diethylene glycol, triethylene glycol, propylene glycol, butanediol, 1,4-cyclohexane dimethanol, neopentyl glycol and the like can be used.

First, the laminated film provided as a first aspect of the present invention is explained.

The laminated film according to the first aspect of the invention has a micro-cellular polyester layer A having cushioning and heat insulating properties which function effectively to provide the film with dense and fine image receivability as base of image receiving paper for sublimation or fusion type thermal transfer printing. For minimizing roughness visible (flickering) through the polyester layer B surface and enhancing glossiness, it is preferable that the cells in the polyester layer A are more small in size and more in number. For obtaining such a layer A, a method is preferably used in which a different thermoplastic resin is blended with a polyester such as mentioned above, then a corresponding amount of a surfactant is added, the mixture is extruded, and the extrudate is stretched in at least one axial direction.

The "different thermoplastic resin" mentioned above is a thermoplastic resin which is incompatible with the polyester when mixed and fused together, and is dispersed in the spherical, elliptical, thread or like form (island-and-sea structure).

The content "An" of the said thermoplastic resin incompatible with the polyester in the layer A is usually in the range of 4 to 40% by weight, preferably 6 to 30% by weight, more preferably 8 to 20% by weight, in percentage to the total amount of the thermoplastic resin and polyester. When An is less than 4% by weight, it may not be possible to produce a film sufficiently reduced in weight and provided with preferred cushioning properties, because of too small amount of the cells formed in the film. On the other hand, when An is more than 40% by weight, the produced film may prove unsatisfactory in mechanical strength or heat stability, and when the layer B containing no fine cells is laminated on the layer A, the laminated film surface may not become as smooth as preferred. Such a film is unsuited for uses where high glossiness and fine image receivability are required, such as image receiving paper. Also, when An is more than 40% by weight, there may arise a productivity-related problem that film break may occur frequently during stretching.

Examples of the thermoplastic resins incompatible with the polyesters include polyolefins such as polyethylene, polypropylene, polymethylpentene and polymethylbutene, polystyrenes, polycarbonates, polyphenylene sulfide, and liquid crystal polyesters. Of these resins, polypropylene, polymethylpentene and polystyrenes are preferred in terms of cost and productivity, polypropylene being the most preferred. In the following explanation, polypropylene is used as the representative example of the thermoplastic resins incompatible with the polyesters. However, it should be understood that the thermoplastic resins incompatible with the polyesters is not limited to polypropylene.

The said polypropylene is preferably a crystalline polypropylene polymer of which usually not less than 95 mol%, preferably not less than 98 mol% is constituted by the propylene units. Especially, crystalline polypropyrene homopolymer is preferred. In the case of non-crystalline polypropylene, it tends to exude on the non-oriented polyester sheet surface in the film forming process, causing contamination of the surfaces of the cooling drum, stretching rolls, etc. In the case of the polypropylenes in which the proportion of other structural units than propylene units, for example ethylene units, exceeds 5 mol%, formation of the fine cells in the film tends to become insufficient.

The melt flow index (MFI) of the said polypropylenes is selected from the range of usually 1.0 to 30 g/10 min, preferably 2.0 to 15 g/10 min. When MFI is less than 1.0 g/10 min, the formed cells tend to become too large, increasing the risk of break during stretching. When MFI exceeds 30 g/10 min, uniformity of film density tends to deteriorate with time, resulting in reduced productivity of the production line.

In the present invention, it is preferable to contain a surfactant, preferably a nonionic surfactant, in the polypropylene blend. The term "surfactant" used in the present specification refers to those compounds which are capable of remarkably changing the properties at the interface in a blend of different molten polymers, that is, the compounds that can function to enhance compatibility of the polyester and the thermoplastic resin incompatible therewith at the interface thereof. Specifically, nonionic surfactants such as polyalkylene glycol type, polyhydric alcohol type and silicone type are preferably used, the silicone type surfactants being the most preferred. More specifically, organopolysiloxane-polyoxyalkylene copolymer and alkenylsiloxanes having polyoxyalkylene side chains are preferably used because of their high surface activity:

The content As (wt%) of the surfactant in the polyester layer A, in relation to the content An (wt%) of the thermoplastic resin incompatible with the polyester, is preferably defined to be $0.002XAn \leq As \leq 0.2XAn$, more preferably $0.005XAn \leq As \leq 0.1XAn$. When As<0.002XAn, glossiness of the laminated film surface (on the layer B side) may become unsatisfactory as the incompatible resin may not be dispersed with desired fineness. On the other hand, when As>0.2XAn, there can be expected no further improvement of the effect of promoting fine dispersion of the incompatible resin, and rather adverse effects on film quality, such as reduction of whiteness of the film, are liable to occur.

The polyester layer B constituting the laminated film of the present invention needs to contain white inorganic particles at a rate of 0.05 to 0.44 $g/m^2$. As such white inorganic particles, there can be used the known materials such as titanium oxide, calcium carbonate, barium sulfate, calcium sulfate, zinc oxide, silica, alumina, talc and clay. Of these materials, titanium oxide which is granular and small in particle size is preferred for advantage in maintenance of glossiness and opacifying effect. When the content of the white inorganic particles in the polyester layer B is held within the above-defined range, glossiness of the polyester layer B side surface of the film is maintained to an appropriate degree, and it becomes possible for the film to receive a high-density, flickering-free fine image. The preferred content of the white inorganic particles is in the range of 0.10 to 0.40 $g/m^2$, more preferably 0.15 to 0.35 $g/m^2$. When the content of the white inorganic particles in the polyester layer B is less than 0.05 $g/m^2$, the opacifying effect of the layer B may be unsatisfactory and roughness of the polyester layer A may become visible through the layer B to cause flickering of the received image and a reduced image density. On the other hand, when the content of the white inorganic particles exceeds 0.44 $g/m^2$, glossiness of the polyester layer B surface may be reduced, making it impossible to provide desired glossiness to the received image envisioned in the present invention.

The particle size of the white inorganic particles used in the present invention is usually not more than 3 $\mu m$. When the particle size exceeds 3 $\mu m$, there tend to arise the problems such as interfacial separation between the polyester layer B and the adjoining layer, release of the particles from the film, and reduction of glossiness. More preferably, the particle size is not more than 0.7 $\mu m$.

The polyester layer B of the laminated film of the present invention is preferably as small in thickness as it can be as far as the above-defined range of the content of the said white inorganic particles is satisfied. This is for the reason that it is required that the cushioning and heat insulating properties of the polyester layer A be not impaired when receiving the thermal transfer prints on the film.

The thickness of the polyester layer B is preferably not more than 10 $\mu m$, more preferably 0.5 to 5 $\mu m$, still more preferably 0.5 to 2.4 $\mu m$. When the polyester layer B thickness exceeds 10 $\mu m$, the image-receiving laminated film surface tends to lack in flexibility, and when the layer B thickness is less than 0.5 $\mu m$, glossiness of the layer B surface tends to reduce, and it also becomes difficult to control the layer thickness.

The polyester constituting the polyester layer B preferably comprises ethylene terephthalate or ethyllene-2,6-naphthalate as main structural units.

In the present invention, it is preferable that glossiness at 60° ($G_{60}$) and glossiness at 20° ($G_{20}$) of the polyester layer B surface of the laminated film satisfy to the following relationships (1) and (2):

$$G_{20} \geq (G_{60} - 50) \tag{1}$$

$$G_{20} \geq 30 \tag{2}$$

When $G_{20}$ of the polyester layer B surface is less than ($G_{60}$ - 50)% or less than 30%, the received image tends to fail to have the required glossiness. More preferably, $G_{20}$ is not less than ($G_{60}$ - 40)% and also not less than 50%, even more preferably $G_{20}$ is not less than ($G_{60}$ - 30)% and also not less than 60%.

When $G_{20}$ exceeds 120%, the sup properties of the film surface may be deteriorated, giving rise to such problems as: the film becomes liable to scratch; the film tends to stick to the ink sheet to cause white dot in images; and several sheets of image receiving paper are carried in piles. More preferably, the upper limit of $G_{20}$ is set at 99%.

The degree of roughness Ra of the polyester layer B surface of the laminated film of the present invention preferably falls within the range of 0.03 to 0.30 $\mu m$. When Ra is less than 0.03 $\mu m$, the film surface is too flat, producing the same problem as encountered when glossiness of the film exceeds the upper threshold value. When Ra is more than 0.30 $\mu m$, the received image may lack in fineness. The preferred range of Ra is from 0.04 to 0.20 $\mu m$, more preferably from 0.05 to 0.15 $\mu m$.

The density $\rho_A$ of the layer A of the laminated film of the present invention is in the range of 0.50 to 1.20 $g/cm^3$, preferably 0.60 to 1.15 $g/cm^3$, more preferably 0.70 to 1.10 $g/cm^3$. When layer A density is more than 1.20 $g/cm^3$, the

content of the cells is too small to provide the cushioning properties necessary for the laminated film of the present invention to show desired image receivability. On the other hand, when layer A density is less than 0.50 g/cm$^3$, the laminated film lacks in mechanical strength and heat stability, giving adverse effects on product quality and production continuity.

The layer B density $\rho_B$ needs to be 0.10 g/cm$^3$ or more higher than $\rho_A$ and not less than 1.10 g/cm$^3$, preferably 0.10 g/cm$^3$ or more higher than $\rho_A$ and not less than 1.20 g/cm$^3$, more preferably not less than 1.30 g/cm$^3$. When the above requirements, that is, $\rho_B$ is 0.10 g/cm$^3$ or more higher than $\rho_A$ and not less than 1.10 g/cm$^3$, are not satisfied, the layer B surface is not provided with desired high glossiness, and also the difference between $G_{60}$ and $G_{20}$ does not show the tendency to decrease.

Intrinsic viscosity IV of the polyester material constituting the layer A of the laminated film of the present invention preferably falls within the range of 0.55 to 0.80. When IV of the polyester material constituting the layer A is less than 0.55, film break tends to take place in the film forming process, and also the cells formed in the film tend to become non-uniform in size, which makes it difficult to control film density, resulting in reduced productivity. On the other hand, when IV is more than 0.80, formation of the fine cells tends to be suppressed.

IV of the polyester material constituting the layer B of the laminated film may be of the same level as or different from the polyester layer A, but is preferably higher than that of the polyester layer A for enhancing production continuity.

The laminated film of the present invention is preferably white and has high opacifying power for allowing obtainment of clear images when the film is used as base of various types of image receiving paper, especially those for video printers. Therefore, in the film of the present invention, in order to provide the preferred whiteness and opacifying properties, the same white inorganic particles as used in the polyester layer B mentioned above may be contained in the polyester layer A, too. It is effective to add a fluorescent brightener in both of the layers A and B for further elevating the degree of whiteness.

The white pigment content in the polyester layer A is preferably 1 to 20% by weight, more preferably 2 to 15% by weight.

The fluorescent brighteners that can be preferably used in the present invention are commercially available, for example, "Uvitex" produced by Ciba Specialty Chemicals Ltd. and "OB1" available from Eastman Chemical Co. The preferred content of the fluorescent brightener in each layer is in the range of 0 to 0.30% by weight.

Transmission density of the laminated film of the present invention is usually not less than 0.3, preferably not less than 0.5. When transmission density is less than 0.3, the film tends to lack in light shielding effect, resulting in reduced quality of (the image received on) the image receiving paper using the film.

Whiteness of the laminated film of the present invention can be represented by the W value determined according to JIS L1015-1992 Method C in which five pieces of film are placed one upon another for measurement. W value of the film is usually not less than 75, preferably not less than 80. When the W value is smaller than 75, the image receiving paper using the film (and the image received thereon) tends to lack in sense of quality due to deterioration of coloration.

In the present invention, in addition to the said white inorganic particles, fluorescent brightener and surfactant, there can also be blended as desired other known additives such as lubricant, antioxidant, heat stabilizer, antistatic agent, dye, pigment, etc., in the polyester and/or the thermoplastic resin incompatible with the said polyester.

The film according to the present invention comprises at least two polyester layers A and B which are different in composition. The film can be formed by melting and extruding the polymers of the predetermined formulations and stretching the extrudate in at least one axial direction by a method such as roll stretching or tentering. It is preferable to use a combination of biaxial stretching and heat treatment for forming the fine cells in the preferred way and for providing appropriate film strength and dimensional stability.

Here, an example of film forming process involving biaxial stretching is explained.

Basically the layer structure is B/A/B, which indicates that the structure comprising 3 layers of 2 different types of material, or B/A indicating 2 layers of 2 different types of material. If desired, the structure may have a more number of layers. First, the materials of the formulations for the respective layers are supplied to the corresponding extruders, melted and kneaded in the respective extruder lines, and then led into a die usually through a multimanifold or feed block.

The molten sheet extruded from the die is rapidly cooled to a temperature below the glass transition point on a rotary cooling drum and thereby solidified to obtain a non-oriented sheet which is substantially in an amorphous state. In this operation, it is preferable to enhance adhesion between the sheet and the rotating cooling drum for improving flatness of the sheet and the sheet cooling effect. For this purpose, the electrostatic pinning technique is preferably used in the present invention.

The electrostatic pinning technique is a method in which usually the filamentary electrodes are provided on the upper side of the sheet in the direction orthogonal to the movement of the sheet, and a DC voltage of about 5 to 15 kV is applied to the said electrodes to give a static charge to the sheet to thereby enhance adhesion of the sheet to the drum.

The thus obtained sheet is then stretched biaxially to make a film. The fine cells contained in the polyester film of the present invention are formed by the such stretching.

In this operation, the non-stretched sheet is first stretched in one direction (in the machine direction) at usually 70 to 150°C, preferably 75 to 130°C, for a stretch ratio of usually 2.5 to 6.0 times, preferably 3.0 to 5.0 times. A roll or tenter type stretching machine can be used for the said stretching. Then the sheet is stretched in the direction (in the transverse direction) orthogonal to the initial stretching usually at 75 to 150°C, preferably 80 to 140°C, for a stretch ratio of usually 2.5 to 6.0 times, preferably 3.0 to 5.0 times, thereby obtaining a biaxially oriented film. A tenter type stretching machine can be used for this stretching.

The said one-direction (machine-direction) stretching can be performed in two or more stages, but in this case, too, it is preferable that the final stretch ratio falls within the above-defined range. Also, the said non-stretched sheet may be stretched biaxially at the same time to an areal stretch ratio of 7 to 30 times. This is followed by a heat treatment which is usually conducted at 150 to 250°C under an elongation or restricted shrinkage of not more than 30% for one second to 5 minutes. After biaxial stretching, the film may be again stretched 1.05 to 2.0 times in the machine direction at 110 to 180°C, and then subjected to a heat treatment. In this case, it is also possible to incorporate if desired such steps as heat setting before longitudinal re-stretching, longitudinal relaxing after longitudinal re-stretching, and small-ratio longitudinal stretching before or after longitudinal re-stretching. Re-stretching in the transverse direction may also be conducted in the similar way. Further, various types of surface treatment may be conducted if desired in the film forming process.

Thickness of the said micro-cellular laminated polyester film is usually in the range of 20 to 250 μm, preferably 25 to 200 μm.

The film according to the present invention can be used advantageously either as a single form of laminated film or as a bonded laminate with other materials such as paper, synthetic paper, plastic film, etc., for image receiving paper for various types of thermal transfer printers such as video printers, labels, recording paper, posters, mounts for seal prints, litho printing plates, packaging materials, tags, etc.

The film of the present invention gives an impression of high glossiness and presents a surface which is uniform and proof against flickering, so that it is suited for use as a printing base, such as base of image receiving paper for video printers.

Next, a micro-cellular polyester film according to the second aspect of the present invention is described as follows.

The film according to the second aspect of the invention is a micro-cellular polyester film having cushioning and heat insulating properties which function effectively to provide the film with dense and fine image receivability as base of image receiving paper for sublimation or fusion type thermal transfer printing. For minimizing roughness and enhancing glossiness, it is preferable that the cells in the polyester film are more small in size and more many in number. For obtaining such a film, a method is preferably used in which a different thermoplastic resin is blended with a polyester such as mentioned above, then a corresponding amount of a surfactant is added, the mixture is extruded, and the extrudate is stretched in at least one axial direction.

The "different thermoplastic resin" mentioned above is a thermoplastic resin which is incompatible with the polyester when mixed and fused together, and is dispersed in the spherical, elliptical, thread or like form (island-and-sea structure).

The content An of the said thermoplastic resin incompatible with the polyester in the layer A is usually in the range of 4 to 40% by weight, preferably 6 to 30% by weight, more preferably 8 to 20% by weight, in percentage to the total amount of the thermoplastic resin and polyester.

In the second aspect, when the content An of the thermoplastic resin exceeds 40% by weight, the film may lack in mechanical strength and heat stability, and also the laminated film surface may not become smooth satisfactorily. Such a film is unsuited for uses where high glossiness and fine image receivability are required, such as image receiving paper. When An exceeds 40% by weight, there may arise a productivity-related problem that the film breaks frequently in the stretching step.

Examples of the thermoplastic resins incompatible with the polyesters include polyolefins such as polyethylene, polypropylene, polymethylpentene and polymethylbutene, polystyrenes, polycarbonates, polyphenylene sulfide, and liquid crystal polyesters. Of these resins, polypropylene, polymethylpentene and polystyrenes are preferred in terms of cost and productivity, polypropylene being the most preferred. In the following explanation, polypropylene is used as the representative example of the thermoplastic resins incompatible with the polyesters. However, it should be understood that the thermoplastic resins incompatible with the polyesters is not limited to polypropylene.

The said polypropylene is preferably a crystalline polypropylene polymer of which usually not less than 95 mol%, preferably not less than 98 mol% is constituted by the propylene units. Especially, crystalline polypropyrene homopolymer is preferred. In the case of non-crystalline polypropylene, it tends to bleed out on the non-oriented polyester sheet surface in the film forming process, causing contamination of the surfaces of the cooling drum, stretching rolls, etc. In the case of the polypropylenes in which the proportion of other structural units than propylene units, for example ethylene units, exceeds 5 mol%, formation of the fine cells in the film tends to become insufficient.

The melt flow index (MFI) of the said polypropylenes is selected from the range of usually 1.0 to 30 g/10 min, preferably 2.0 to 15 g/10 min. When MFI is less than 1.0 g/10 min, the formed cells tend to become too large, increasing the risk of break during stretching. When MFI exceeds 30 g/10 min, uniformity of film density tends to deteriorate with time, resulting in reduced productivity of the production line.

In the present invention, it is preferable to contain a surfactant, preferably a nonionic surfactant, in the polypropylene blend. The term "surfactant" used in the present specification refers to those compounds which are capable of remarkably changing the properties at the interface in a blend of different molten polymers, that is, the compounds that can function to enhance compatibility of the polyester and the thermoplastic resin incompatible therewith at the interface thereof. Specifically, nonionic surfactants such as polyalkylene glycol type, polyhydric alcohol type and silicone type are preferably used, the silicone type surfactants being the most preferred. More specifically, organopolysiloxane-polyoxyalkylene copolymer and alkenylsiloxanes having polyoxyalkylene side chains are preferably used because of their high surface activity.

The content As (wt%) of the surfactant in the polyester layer A, in relation to the content An (wt%) of the thermoplastic resin incompatible with the polyester, is preferably defined to be $0.002 \times An \leq As \leq 0.2 \times An$, more preferably $0.005 \times An \leq As \leq 0.1 \times An$. When $As < 0.002 \times An$, glossiness of the laminated film surface (on the layer B side) may become unsatisfactory as the incompatible resin may not be dispersed with desired fineness. On the other hand, when $As > 0.2 \times An$, there can be expected no further improvement of the effect of promoting fine dispersion of the incompatible resin, and rather adverse effects on film quality, such as reduction of whiteness of the film, are liable to occur.

The micro-cellular polyester film according to the second aspect of the present invention has a specific pore distribution, which enables the film to show excellent image receivability in use as image-receiving base for thermal transfer printing. The pore distribution can be determined by mercury porosimetry in the manner described below.

Generally, the relation between the pressure applied to mercury and the minimal pore diameter allowing ingress of mercury under the applied pressure is represented by the following Washburn's formula:

$$P \cdot D = -4\sigma\cos\theta$$

(P: applied pressure; D: pore diameter; σ: surface tension of mercury; θ: contact angle of mercury with the sample)

Thus, the pressure applied to mercury has the relation of being inversely proportional to the pore diameter which allows ingress of mercury. (As the pressure increases gradually, mercury is allowed to enter the pores of smaller diameters.) Therefore, the pore diameter can be determined unequivocally if σ and θ are known. Further, from the displacement of mercury, it is possible to determine the total amount of mercury that entered a pore, viz, pore capacity. The relation of the thus determined pore capacity to a specific range of pore diameter is called pore distribution.

Based on the above pore distribution principle, the size of the pore can be quantified in terms of diameter in the following way.

(1) The pore diameter that provides the top peak (log differential of the integrated value of pore capacity ($cm^3$/g) being the largest) is designated volume-based mode diameter (μm).
(2) The pore diameter at which the integrated value of pore capacity corresponds to 50% of the total pore capacity V ($cm^3$/g) is designated volume-based median diameter (μm).
(3) The value given from the formula $4 \times V \div A$ (where A is the integrated pore surface area in each pore diameter, $m^2$/g) is designated average pore diameter (μm).

In the present invention, it is essential that the pore distribution mode diameter (volume-based) of the surface falls in the range of 0.01 to 0.15 μm. When the volume-based pore distribution mode diameter exceeds 0.15 μm, the film may lack in glossiness. On the other hand, when the pore distribution mode diameter is less than 0.01 μm, the film surface may become too flat, giving rise to such problems as blocking of the film when rolled up, film susceptivity to scratch, and possibility of plural sheets of image receiving paper being carried in pile. The preferred more distribution mode diameter is 0.01 to 0.07 μm, more preferably 0.01 to 0.04 μm.

In the present invention, it is preferable to use a mixture of the virgin polyester and a reclaimed polymer because of advantage in material cost and from the environmental consideration to reduce release of scraps from the film production process. It is also preferable to use the film edges discharged from the production process of the micro-cellular polyester films containing an incompatible thermoplastic resin or the used film products as reclaimed polyester.

It is quite surprising that even if the pore distribution mode diameter of the film to be recycled exceeds 0.15 μm, it is possible that the pore distribution mode diameter of the micro-cellular polyester film containing proper amount of the recycled film be confined in the range of 0.01 to 0.15 μm.

In the present invention, the percentage of the recycled material in the feedstock is preferably in the range of 5 to 60% by weight, more preferably 10 to 50% by weight, even more preferably 15 to 40% by weight, based on the total amount of the polyesters. When the percentage of the recycled material is less than 5% by weight, the effect of reducing the material cost may be unsatisfactory, and when the said percentage exceeds 60% by weight, the obtained film tends to assume a yellowish tint.

It is also preferable that the polyester (a mixture of the virgin polyester and a reclaimed polyester) used in the present invention has an intrinsic viscosity IV of 0.45 to 0.72 at the stage of the film. When IV is less than 0.45, film break tends to take place in the film forming process, and also the cells in the film tend to become non-uniform in size to make it difficult to control the film density, resulting in reduced productivity of the film. When IV exceeds 0.72, formation of the cells tends to be suppressed. The preferred range of IV is 0.50 to 0.69, especially 0.55 to 0.65.

While the said reclaimed material may be utilized (re-fed) in the form of reclaimed chips by melt extruding the material after crushing, it may not necessarily be made into chips; it is preferred for reduction of production cost to use the said reclaimed material in the form of flakes and supply it directly to a vented double-screw extruder together with the virgin polyester chips. The micro-cellular film of the present invention may be used as a laminated film with other film, but since the said reclaimed material contain a polymer or polymers incompatible with the polyesters, it is preferable to blend the said reclaimed material only in the material which is to form the micro-cellular layer of the laminated film.

The micro-cellular film of this invention preferably has a high level of glossiness for obtaining a clear image especially when the film is used for various types of image receiving paper for video printers and such. Specifically, it is preferable that the $60°$ glossiness $G_{60}$ of the film as determined by JIS Z 8741-1983 Method 3 is not less than 20%. When $G_{60}$ is less than 20%, the image received on the film tends to lack in fineness (glossiness). More preferably, $G_{60}$ is not less than 30%, even more preferably not less than 40%.

When $G_{60}$ exceeds 120%, the film surface becomes too flat, giving rise to such problems as blocking of the film when rolled up, film susceptivity to scratch, and possibility of plural sheets of image receiving paper being carried in pile.

Surface roughness Ra of the micro-cellular film according to the present invention is preferably 0.03 to 0.35 $\mu$m. When Ra is less than 0.03 $\mu$m, the film surface becomes too flat and there may arise the same problems as encountered when glossiness exceeds the upper limit value. On the other hand, when Ra exceeds 0.30 $\mu$m, the received image tends to lack in fineness. The more preferred range of Ra is 0.05 to 0.20 $\mu$m, even more preferably 0.07 to 0.15 $\mu$m.

Density of the film according to the second aspect is preferably in the range of 0.90 to 1.35 g/cm$^3$. When the film density exceeds 1.35 g/cm$^3$, the cell content of the film becomes too low, which tends to impair the cushioning properties required for the micro-cellular film of this invention to be able to show a dense image receivability. When the film density is less than 0.90 g/cm$^3$, the film tends to lack in mechanical strength and heat stability, giving rise to the problems on quality and production continuity. The more preferred range of film density is 1.00 to 1.30 g/cm$^3$, even more preferably 1.10 to 1.25 g/cm$^3$.

The micro-cellular film according to the second aspect is preferably white and has a high degree of opacifying properties for forming a clear image when the film is used as base of various types of image receiving paper, especially those for video printers. For providing such properties to the film, white inorganic particles may be contained in the micro-cellular polyester film. It is also effective to add a fluorescent brightener for further emphasizing whiteness of the film.

As the said white inorganic particles, it is possible to use the known materials such as titanium oxide, calcium carbonate, barium sulfate, calcium sulfate, zinc oxide, silica, alumina, talc and clay. Of these materials, titanium oxide which is granular and small in particle size is preferred in view of maintenance of glossiness and opacifying properties. The preferred content of white inorganic particles is 0.5 to 20% by weight, more preferably 1 to 10% by weight. When the particle content is less than 0.5% by weight, the micro-cellular polyester film may lack in opacifying power, resulting in unsatisfactory quality of the received image, especially in contrast and clearness. When the particle content exceeds 20% by weight, the problem arises that the particles tend to agglomerate to form coarse projections on the film surface. In case where two or more types of particles are used, it is preferable to adjust the amounts of the particles added so that the total content will fall within the above-defined range.

The size (diameter) of the white inorganic particles is usually not more than 3 $\mu$m. When the particle size exceeds 3 $\mu$m, there tend to arise such problems as release of particles from the film and reduction of glossiness of the film. The particle size is more preferably not more than 0.7 $\mu$m.

The fluorescent brighteners that can be preferably used in the present invention are commercially available, for example, Ubitex produced by Ciba Specialty Chemicals Ltd. and "OB1" available from Eastman Chemical Co. The preferred content of the fluorescent brightener in each layer is in the range of 0 to 0.30% by weight.

Transmission density of the laminated film of the present invention is usually not less than 0.3, preferably not less than 0.5. When transmission density is less than 0.3, the film tends to lack in light shielding effect, resulting in reduced quality of (the image received on) the image receiving paper using the film.

Whiteness of the micro-cellular film according to the second aspect can be represented by the W value determined according to JIS L1015-1992 Method C using five sheets of film laid one on top of another. It is preferable that the W value of the film is not less than 80. When the W value is less than 80, the film tends to reduce in quality impression when used as image receiving paper due to deterioration of coloration. The W value is more preferably not less than 85, even more preferably not less than 90.

In the present invention, in addition to the said white inorganic particles, fluorescent brightener and surfactant, there can also be blended as desired other known additives such as lubricant, antioxidant, heat stabilizer, antistatic agent, dye, pigment, etc., in the polyester and/or the thermoplastic resin incompatible with the said polyester.

The film can be formed by melting and extruding the polymers of the predetermined formulations and stretching the extrudate in at least one axial direction by a method such as roll stretching or tentering. It is preferable to use a combination of biaxial stretching and heat treatment for forming the fine cells in the preferred way and for providing appropriate film strength and dimensional stability.

Here, an example of film forming process involving biaxial stretching is explained.

First, the materials of the formulations for the respective layers are supplied to the corresponding extruders, melted and kneaded in the respective extruder lines, and then led into a die usually through a multimanifold or feed block.

The molten sheet extruded from the die is rapidly cooled to a temperature below the glass transition point on a rotary cooling drum and thereby solidified to obtain a non-oriented sheet which is substantially in an amorphous state. In this operation, it is preferable to enhance adhesion between the sheet and the rotating cooling drum for improving flatness of the sheet and the sheet cooling effect. For this purpose, the electrostatic pinning technique is preferably used in the present invention.

The electrostatic pinning technique is a method in which usually the filamentary electrodes are provided on the upper side of the sheet in the direction orthogonal to the movement of the sheet, and a DC voltage of about 5 to 15 kV is applied to the said electrodes to give a static charge to the sheet to thereby enhance adhesion of the sheet to the drum.

The thus obtained sheet is then stretched biaxially to make a film. The fine cells contained in the polyester film of the present invention are formed by the such stretching.

In this operation, the non-stretched sheet is first stretched in one direction (in the machine direction) at usually 70 to 150°C, preferably 75 to 130°C, for a stretch ratio of usually 2.5 to 6.0 times, preferably 3.0 to 5.0 times. A roll or tenter type stretching machine can be used for the said stretching. Then the sheet is stretched in the direction (in the transverse direction) orthogonal to the initial stretching usually at 75 to 150°C, preferably 80 to 140°C, for a stretch ratio of usually 2.5 to 6.0 times, preferably 3.0 to 5.0 times, thereby obtaining a biaxially oriented film. A tenter type stretching machine can be used for this stretching.

The said one-direction (machine-direction) stretching can be performed in two or more stages, but in this case, too, it is preferable that the final stretch ratio falls within the above-defined range. Also, the said non-stretched sheet may be stretched biaxially at the same time to an areal stretch ratio of 7 to 30 times. This is followed by a heat treatment which is usually conducted at 150 to 250°C under an elongation or restricted shrinkage of not more than 30% for one second to 5 minutes. After biaxial stretching, the film may be again stretched 1.05 to 2.0 times in the machine direction at 110 to 180°C, and then subjected to a heat treatment. In this case, it is also possible to incorporate if desired such steps as heat setting before longitudinal re-stretching, longitudinal relaxing after longitudinal re-stretching, and small-ratio longitudinal stretching before or after longitudinal re-stretching. Re-stretching in the transverse direction may also be conducted in the similar way. Further, various types of surface treatment may be conducted if desired in the film forming process.

Thickness of the said micro-cellular laminated polyester film according to the second aspect is usually 20 to 250 μm, preferably 25 to 200 μm. In the case of a laminated film, it is preferable that the thickness of the micro-cellular layer is not less than 20% of the overall thickness of the film. When the thickness of the micro-cellular layer is less than 20% of the overall film thickness, the features, such as light weight and cushioning properties, of the micro-cellular polyester film of the present invention may be degraded.

The film according to the second aspect can be used as a single form of micro-cellular film or as a bonded laminate with other sheet materials such as paper, synthetic paper, plastic film, etc., for image receiving paper for various types of thermal transfer printers such as video printers, labels, recording paper, posters, mount for seal prints, lithographic printing plates, packaging materials, tags, etc.

The film according to the second aspect is a film having excellent image receivability and suited for use as a printing base of image receiving paper for video printers, etc.

EXAMPLES

The present invention is further illustrating by the following examples, but it should be understood that these examples are merely intended to be illustrative and not to be construed as limiting the scope of the invention. The "silicone-based surfactant" used in the Examples and Comparative Examples is a commercial product "SH193" available from Toray Dow Corning Silicone Co. , Ltd. The evaluation methods used in these examples are as described below.

(1) Intrinsic viscosity (IV) of polyester (dl/g)

To 1 g of a polyester cleared of other polymeric substances incompatible with the polyester and white pigment, 100 ml of a 50/50 (by weight) mixture of phenol and tetrachloroethane was added and dissolved, and the viscosity of the solution was measured at 30°C.

(2) Melt flow index (MFI) (g/10 min)

Measured according to JIS K-7210-1995 at 230°C and 21.2 N. The higher the value of MFI is, the lower is the melt viscosity of the polymer.

(3) Average particle size ($\mu$m) of admixture

The particle size at an integrated volume fraction of 50% in the equivalent-sphericity profile determined by a centrifugal sedimentation type particle size distribution meter SA-CP3 mfd. by Shimadzu Corp. was shown as average particle size.

(4) Film density (g/cm$^3$)

A 10 cm x 10 cm square sample was cut out from an arbitrary portion of the film, and its weight was measured. Then the thickness at the 9 arbitrary parts of the sample was measured by a micrometer, and the weight per unit volume was calculated from the average of these measurements of thickness and the weight. Measurement was made 5 times (n = 5), and the average of 5 measurements was shown as density of the laminated film. Further, after determining the thickness of each of the layers A and B by a scanning electron microscope, the laminated film was cut by a microtome to leave the layer A portion alone and its density was determined by a density gradient tube. From the thickness ratio of both layers and the determined value of density of the layer A, density of the layer B was calculated. Measurement was made 5 times (n = 5), and the average of 5 measurements was shown.

(5) Pore distribution

Using an automatic porosimeter (Autopore III 9420) mfd. by Micromeritics Ltd. (a product by Shimadzu Corp.), the volume-based mode diameter, median diameter and average pore diameter (4 V/A) were measured by mercury porosimetry. The mercury/sample contact angle was set at 130°, the surface tension of mercury was adjusted to be 484 dynes/cm, and initial pressure was set at 1.1 psia. The pores with diameters more than 4.0 $\mu$m were supposed as voids between the samples and left out of consideration.

(6) Titanium oxide content (g/m$^2$) in polyester layer B

The content was calculated from the following equation:

$$\text{Content (g/m}^2) = \text{layer B thickness (}\mu\text{m)} \times \text{layer B density (g/cm}^2) \times \text{wt\% of titanium oxide in layer B} \div 100$$

(7) Glossiness (%)

According to JIS Z-8741-1983 Method 3 (60° glossiness) and Method 5 (20° glossiness), light was passed in the machine direction of the layer surface of the film and its glossiness was measured. The measured side corresponded to the casting side (the casting roll contacted side). Measurement was made 3 times, and the average of 3 measurements was shown.

(8) Center-line average surface roughness Ra ($\mu$m)

The layer surface was measured by a universal surface shape meter SE-3F mfd. by Kosaka Kenskyusho Ltd. Measurement was made 12 times on the layer B surface under the following conditions, and the average of 10 measurements was determined with the top and bottom measurements counted out.

(Measuring conditions)

Feeler end diameter: 2 μm
Measuring force: 0.03g gf
Measured length: 2.5 mm
Cut-off: 0.8 mm

(9) Transmission density

Visual light transmission density was measured by a Macbeth densitomer TD-904. Measurement was made at 5 points. The greater the measured value of transmission densities, the lower is light transmittance.

(10) Whiteness (W value)

Whiteness of the layer surface was measured according to JIS L1015-1992 using a colorimeter 300A (C light source, 2° field of view) mfd. by Nippon Denshoku KK. Measurement was made at 5 points, and the average of 5 measurements was shown.

(11) Evaluation of glossiness and fineness (image density and flickering) of printed image

Each laminated film sample was pasted on a polyester film W900E100 (100 μm thick) produced by Mitsubishi Polyester Film Corporation, and thermal transfer printing was carried out on the layer B side of the film having a coating of a coloring material receiving layer by a video printer (SHARP GZ-P11W). Quality of the obtained hard copies was visually observed, evaluating glossiness and fineness (density and flickering) of the image. As criterion of evaluation, the film sample which was judged to have formed image of highest quality in glossiness and fineness was rated "3", the sample which was judged to have formed image of quality next to the "3" rated sample was rated "2", the sample which was rather poor in image quality but judged to be capable of practical use was rated "1", and the sample which was low in glossiness and/or fineness of the image and judged to be incapable of practical use was rated "x".

(12) Evaluation of image receivability in printing

Each film sample was pasted to a polyester film W900E100 (100 μm thick) produced by Mitsubishi Chemical Corporation, and thermal transfer printing was conducted on the side of the film having a coating of a coloring material receiving layer by a video printer (SHARP GZ-P11W). Quality of the obtained hard copies was visually observed to evaluate the image. As criterion of evaluation, the sample which was judged to have formed image of highest quality was rated "3", the sample which was judged to have formed image of quality next to the "3" sample was rated "2", the sample which was relatively poor in image quality but judged to be capable of practical use was rated "1", and the sample which was judged to be incapable of practical use was rated "x".

<u>Example 1</u>

Polyethylene terephthalate chips (IV = 0.66) were blended homogeneously with 12.4% by weight of crystalline polypropylene chips (MFI = 10 g/min), 0.1% by weight of a silicone-based surfactant, 2.4% by weight of titanium oxide (average particle size = 0.3 μm) and 0.10% by weight of a fluorescent brightener OB1 to prepare a polyester material A1.
Meanwhile, polyethylene terephthalate (IV = 0.66) were blended with 8.0% by weight of titanium oxide (average particle size = 0.3 μm) and 0.10% by weight of OB1 to prepare a polyester material B1.
The said materials were supplied into the respective vented double-screw extruders and melted at 280°C, and the melts were led into a same die, formed into a molten laminate of two layers, i.e. layer A (made of material A1) and layer B (made of material B1), extruded slit-wise into the form of a sheet, and cooled on a 30°C casting roll to obtain a two-material, two-layer non-oriented sheet. This sheet was stretched 3.1 times in the machine direction (longitudinal direction) at 80°C, then further stretched 3.4 times in the transverse direction at 105°C and heat treated in a tentering stretcher at 230°C for 5 seconds to obtain a micro-cellular biaxially oriented film having a final thickness ratio (layer B/layer A) of 2.4/37.6 μm. The properties of the thus obtained film are shown in Table 1.

Examples 2 to 7

The same procedure as defined in Example 1 was conducted except that the titanium oxide content in the material B1 and the layer B thickness were changed as shown in Table 1 and Table 2 to obtain the micro-cellular biaxially oriented films.

Comparative Example 1

The same procedure as defined in Example 1 was conducted except that the contents of polypropylene and silicone-based surfactant in the material A1 were reduced to 3% and 0.025% by weight, respectively, to obtain a micro-cellular biaxially oriented film.

Comparative Example 2

The same procedure as defined in Example 1 was conducted except that 9.5 % by weight of crystalline polypropylene chips (MFI = 10 g/min) and 0.075% by weight of a silicone-based surfactant were further added into the material B1, to obtain a micro-cellular biaxially oriented film.

Comparative Examples 3 and 4

The same procedure as defined in Example 1 was conducted except that the titanium oxide content in the material B1 was changed as shown in Table 3 to obtain the micro-cellular biaxially oriented films.

The results obtained in the above Examples and Comparative Examples are shown collectively in Tables 1 to 3.

Table 1

|  | Example 1 | Example 2 | Example 3 | Example 4 |
|---|---|---|---|---|
| Laminated film density (g/cm$^3$) | 1.06 | 1.06 | 1.06 | 1.07 |
| Layer A density (g/cm$^3$) | 1.04 | 1.04 | 1.04 | 1.04 |
| Layer B density (g/cm$^3$) | 1.44 | 1.42 | 1.41 | 1.46 |
| Layer thickness ratio: B/A (μm) | 2.4/37.6 | 2.4/37.6 | 2.4/37.6 | 2.4/37.6 |
| Titanium oxide in layer B (wt%) | 8 | 4 | 2 | 12 |
| Ditto (g/cm$^2$) | 0.28 | 0.14 | 0.07 | 0.42 |
| $G_{60}$ (%) | 93 | 104 | 113 | 85 |
| $G_{20}$ (%) | 63 | 94 | 106 | 39 |
| Ra (μm) | 0.14 | 0.13 | 0.13 | 0.15 |
| Transmission density | 0.54 | 0.52 | 0.51 | 0.56 |
| Whiteness W value | 84.5 | 81.4 | 79.2 | 85.6 |
| Image glossiness | 3 | 3 | 3 | 2 |
| Image fineness | 3 | 2 | 1 | 3 |

Table 2

|  | Example 5 | Example 6 | Example 7 |
|---|---|---|---|
| Laminated film density (g/cm$^3$) | 1.09 | 1.11 | 1.11 |
| Layer A density (g/cm$^3$) | 1.04 | 1.04 | 1.04 |



Table 2 (continued)

|  | Example 5 | Example 6 | Example 7 |
|---|---|---|---|
| Layer B density (g/cm$^3$) | 1.42 | 1.42 | 1.41 |
| Layer thickness ratio: B/A (μm) | 4.8/35.2 | 7.2/32.8 | 7.2/32.8 |
| Titanium oxide in layer B (wt%) | 3 | 3 | 1 |
| Ditto (g/m$^2$) | 0.20 | 0.31 | 0.10 |
| $G_{60}$ (%) | 109 | 110 | 119 |
| $G_{20}$ (%) | 100 | 101 | 116 |
| Ra (μm) | 0.10 | 0.07 | 0.06 |
| Transmission density | 0.52 | 0.52 | 0.49 |
| Whiteness W value | 83.0 | 84.3 | 79.4 |
| Image glossiness | 3 | 3 | 3 |
| Image fineness | 3 | 3 | 1 |

Table 3

|  | Comp. Example 1 | Comp. Example 2 | Comp. Example 3 | Comp. Example 4 |
|---|---|---|---|---|
| Laminated film density (g/cm$^3$) | 1.28 | 1.04 | 1.07 | 1.06 |
| Layer A density (g/cm$^3$) | 1.27 | 1.04 | 1.04 | 1.04 |
| Layer B density (g/cm$^3$) | 1.44 | 1.09 | 1.47 | 1.41 |
| Layer thickness ratio: B/A (μm) | 2.4/37.6 | 2.4/37.6 | 2.4/37.6 | 2.4/37.6 |
| Titanium oxide in layer B (wt%) | 8 | 8 | 15 | 1 |
| Ditto (g/m$^2$) | 0.27 | 0.27 | 0.53 | 0.03 |
| $G_{60}$ (%) | 104 | 30 | 82 | 116 |
| $G_{20}$ (%) | 85 | 4 | 25 | 109 |
| Ra (μm) | 0.07 | 0.28 | 0.15 | 0.13 |
| Transmission density | 0.48 | 0.56 | 0.57 | 0.50 |
| Whiteness W value | 76.6 | 83.6 | 86.0 | 78.4 |
| Image glossiness | 3 | X | X | 3 |
| Image fineness | X | 2 | 3 | X |

Comparative Example 5

Polyethylene terephthalate chips (IV = 0.65) were blended homogeneously with 15% by weight of crystalline polypropylene chips (MFI = 10 g/10 min), 2.4% by weight of titanium oxide (white particles, average particle size = 0.3 μm), 0.05% by weight of a fluorescent brightener and 0.12% by weight of a silicone-based surfactant to prepare a material A2.

This material A2 was supplied directly into a double-screw extruder and melted at 290°C, and the melt was led into a die, extruded slit-wise into the form of a sheet and cooled on a 40°C cooling drum to obtain a non-stretched sheet. This sheet was stretched 3.4 times in the machine direction at 85°C, further stretched 3.2 times in the transverse direction at 110°C and heat treated at 230°C for 5 seconds to obtain a biaxially oriented film having a final thickness of 38 $\mu$m and a final density of 0.87 g/cm$^3$. The properties of this film and the results of its property evaluations are shown in Table 4.

## Example 8

The scraps produced in the course of production of the film of Comparative Example 5 were crushed to obtain the flakes F for recycling. Intrinsic viscosity (IV) of the polyethylene terephthalate in the reclaimed chips was 0.60.
The polyethylene terephthalate chips with IV = 0.67 were blended homogeneously with 12% by weight of crystalline polypropylene chips (MFI = 10 g/10 min) and 20% by weight of the reclaimed flakes F, and then further blended with 1.92% by weight of titanium oxide (average particle size = 0.3 $\mu$m), 0.04% by weight of a fluorescent brightener and 0.12% by weight of a silicone-based surfactant to prepare a material B2.
The same procedure as defined in Comparative Example 5 was conducted except for use of the material B2 instead of the material A2 to obtain a biaxially oriented film having a final thickness of 38 $\mu$m and a final density of 0.91 g/cm$^3$.

## Example 9

The same procedure as defined in Example 8 was conducted except that the amount of the crystalline polypropylene chips (MFI = 10 g/10 min) blended was reduced to 9% by weight to obtain a biaxially oriented film having finally a thickness of 38 $\mu$m and a density of 1.03 g/cm$^3$.

## Example 10

The same procedure as defined in Example 8 was conducted except that the amount of the crystalline polypropylene chips (MFI = 10 g/10 min) blended was further reduced to 6% by weight to obtain a biaxially oriented film having finally a thickness of 38 $\mu$m and a density of 1.12 g/cm$^3$.
The results obtained in the above Examples and Comparative Examples are shown collectively in Table 4.

Table 4

|  | Comp. Example 5 | Example 8 | Example 9 | Example 10 |
|---|---|---|---|---|
| Total polypropylene content (wt%) | 15 | 15 | 12 | 9 |
| Regeneration rate of polyester (%) | 0 | 20 | 19.3 | 18.7 |
| Film density (g/cm$^3$) | 0.89 | 0.91 | 1.03 | 1.12 |
| Pore distribution mode diameter ($\mu$m) | 0.16 | 0.077 | 0.051 | 0.032 |
| Pore distribution median diameter ($\mu$m) | 0.11 | 0.061 | 0.041 | 0.030 |
| Average pore diameter (4V/A) ($\mu$m) | 0.063 | 0.043 | 0.030 | 0.020 |
| $G_{60}$ (%) | 19.3 | 25.8 | 31.6 | 53.4 |
| Ra ($\mu$m) | 0.37 | 0.28 | 0.20 | 0.13 |
| Transmission density | 0.54 | 0.56 | 0.52 | 0.48 |
| Whiteness W value | 92.5 | 92.5 | 92.4 | 92.3 |
| Image quality | X | 1 | 2 | 3 |

## Claims

**1.** A micro-cellular laminated polyester film comprising:

a micro-cellular polyester layer A having a density ($\rho_A$) of 0.50 to 1.20 g/cm$^3$ and
at least one polyester layer B laminated on at least one side of the polyester layer A, having not less than 1.10 g/cm$^3$ of a density ($\rho_B$) which is at least 0.10 g/cm$^3$ higher than $\rho_A$ and, containing 0.05 to 0.44 g/m$^2$ of white inorganic particles.

**2.** A micro-cellular laminated polyester film according to Claim 1, wherein the white inorganic particles contained in the polyester layer B are titanium oxide.

**3.** A micro-cellular laminated polyester film according to Claim 1, wherein 60° glossiness ($G_{60}$) and 20° glossiness ($G_{20}$) of the polyester layer B surface satisfy the following relationships (1) and (2) at the same time:

$$G_{20} \geq (G_{60} - 50) \tag{1}$$

$$G_{20} \geq 30 \tag{2}$$

**4.** A micro-cellular laminated polyester film according to Claim 1, wherein the thickness of the polyester layer B is not more than 10 μm.

**5.** An image receiving paper for video printer, comprising the micro-cellular laminated polyester film as defined in Claim 1 and a coloring material receiving layer formed on the polyester layer B surface of the micro-cellular laminated polyester film.

**6.** A micro-cellular polyester film comprising a polyester and a thermoplastic resin blended with said polyester, which is incompatible with said polyester,

a pore distribution mode diameter by volume-based in the surface of said film being 0.01 to 0.15 μm.

**7.** A micro-cellular polyester film according to Claim 6, having 60° glossiness ($G_{60}$) of not less than 25%.

**8.** A micro-cellular polyester film according to Claim 6, comprising 5 to 60% by weight of reclaimed polyester obtained in the production of the micro-cellular polyester films and 40 to 95% by weight of virgin polyester.

**9.** An image receiving paper for video printer, comprising the micro-cellular polyester film as defined in Claim 6 and a coloring material receiving layer formed on the surface of the micro-cellular polyester film.